Europäisches Patentamt

European Patent Office

Office européen des brevets

(19)

(11) **EP 0 965 052 B1**

(12) **EUROPÄISCHE PATENTSCHRIFT**

(45) Veröffentlichungstag und Bekanntmachung des Hinweises auf die Patenterteilung:
**22.05.2002   Patentblatt 2002/21**

(51) Int Cl.$^7$: **G01S 7/40**, G01S 7/35, G01S 13/34

(21) Anmeldenummer: **98914823.4**

(22) Anmeldetag: **25.02.1998**

(86) Internationale Anmeldenummer:
**PCT/DE98/00559**

(87) Internationale Veröffentlichungsnummer:
**WO 98/38524 (03.09.1998 Gazette 1998/35)**

(54) **VERFAHREN ZUM BETRIEB EINES SENSORSYSTEMS UND SENSORSYSTEM**

SENSOR SYSTEM OPERATING METHOD AND A SENSOR SYSTEM

PROCEDE POUR LE FONCTIONNEMENT D'UN SYSTEME DETECTEUR, ET SYSTEME DETECTEUR

(84) Benannte Vertragsstaaten:
**CH DE FR GB IT LI NL SE**

(30) Priorität: **28.02.1997   DE 19708239**

(43) Veröffentlichungstag der Anmeldung:
**22.12.1999   Patentblatt 1999/51**

(73) Patentinhaber: **SIEMENS AKTIENGESELLSCHAFT
80333 München (DE)**

(72) Erfinder:
 • **VOSSIEK, Martin
   D-80789 München (DE)**
 • **HEIDE, Patric
   D-85579 Neubiberg (DE)**

(56) Entgegenhaltungen:
**EP-A- 0 466 258        WO-A-97/09637
DE-A- 2 710 841        GB-A- 2 165 425
US-A- 4 539 565**

EP 0 965 052 B1

**Beschreibung**

In Meinke, Gundlach, Taschenbuch der Hochfrequenztechnik, 5. Auflage, Springer-Verlag, S. S3 - S4, ist ein FMCW-Radar als Abstands- oder Geschwindigkeitssensor beschrieben. Die Abkürzung FM steht für Frequenzmodulation und CW für Continuous Wave. Eine Signalquelle erzeugt ein sich wellenförmig ausbreitendes, frequenzmoduliertes Signal. Die Signalquelle umfaßt z. B. einen Mikrowellenoszillator und einen Modulator. Das vorzugsweise linear frequenzmodulierte Signal wird von einer Antenne abgestrahlt und von einem Meßobjekt reflektiert. Das empfangene Signal wird in einem Mischer mit dem gerade vorhandenen Sendesignal gemischt. Die sich ergebende Differenzfrequenz ist ein Maß für den Abstand des Meßobjektes von der Antenne. Für die Sende- und Empfangseinrichtung kann eine monostatische oder eine bistatische Antennenanordnung verwendet werden. Bei der monostatischen Anordnung werden das Sende- und das Empfangssignal von der gemeinsamen Sende- und Empfangsantenne abgestrahlt bzw. empfangen. Durch einen Zirkulator oder Richtkoppler wird das Sendesignal von dem Mischer getrennt und das Empfangssignal von der Signalquelle getrennt zum Mischer geleitet. Bei der bistatischen Antennenanordnung sind gesonderte Sende- und Empfangsantennen vorgesehen. Ein Sensorsystem, bei dem eine Frequenzmodulation hoher Genauigkeit mittels einer Regelschleife, die ein Verzögerungselement aufweist, erzeugt wird, ist in DE 27 10 841 A1 beschrieben.

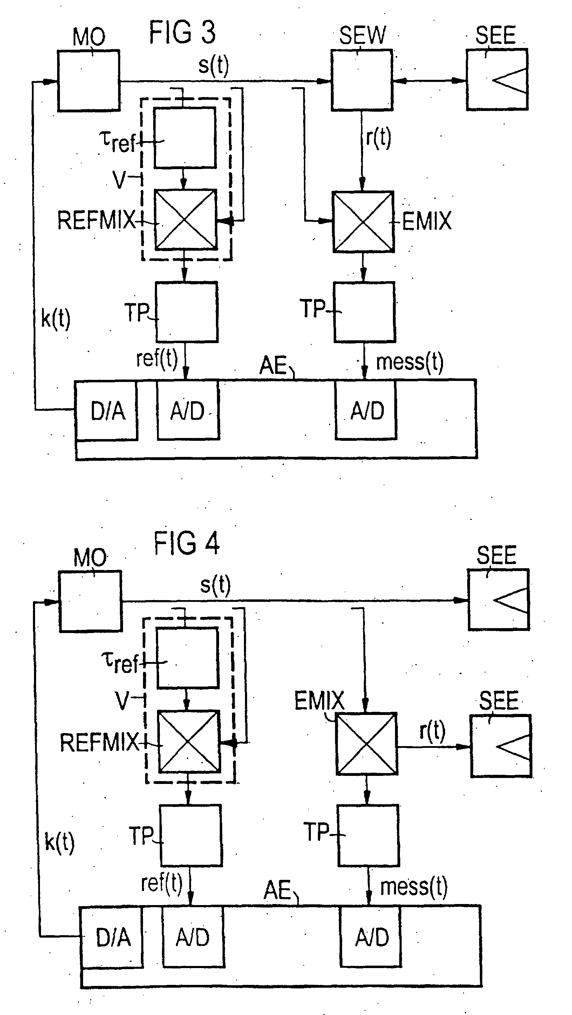

In Figur 3 ist ein Sensorsystem mit einer Verzögerungsleitung zum Erzeugen eines Bezugssignales dargestellt. Dort ist die Signalquelle MO eingezeichnet, die ein Signal liefert, das sich wellenförmig ausbreitet und frequenzmoduliert ist. Das Signal wird vorzugsweise linear moduliert. Das Sendesignal s(t) wird einer Sende- und Empfangsweiche SEW zugeführt, die z. B. ein Zirkulator oder ein Richtkoppler sein kann. Von dieser Weiche gelangt das Sendesignal in die Sende- und Empfangseinheit SEE, die über eine oder mehrere Antennen zum Abstrahlen und zum Empfangen des Mikrowellensignales verfügt. Nachdem das Sendesignal abgestrahlt und von einem Meßobjekt reflektiert worden ist, wird es von der Sende- und Empfangseinrichtung als Empfangssignal r(t) über die Sende- und Empfangsweiche einer Mischeinrichtung EMIX zugeführt, in der das Empfangssignal mit dem Sendesignal s(t) zu dem Meßsignal mess(t) gemischt wird. Anschließend werden vorzugsweise in einem Tiefpaßfilter TP störende hochfrequente Mischkomponenten aus dem Meßsignal beseitigt.

Mit einer Verzögerungseinrichtung V wird das von der Signalquelle MO kommende Sendesignal s(t) verzögert. Das um $\tau_{ref}$ verzögerte Signal wird in einer weiteren Mischeinrichtung REFMIX mit dem Sendesignal s(t) zu dem Bezugssignal ref(t) gemischt, das dann vorzugsweise durch ein Tiefpaßfilter TP geleitet wird. Das Meßsignal mess(t) und das Bezugssignal ref(t) werden einer Auswerteeinrichtung AE zugeführt.

In Figur 4 ist das entsprechende Sensorsystem mit einer bistatischen Antennenanordnung dargestellt. Die Sende- und Empfangsweiche entfällt dabei; die Sende- und Empfangseinrichtung umfaßt zwei getrennte Antennen für Senden und Empfangen.

In der DE 195 33 124 ist eine Vorrichtung zur Abstandsmessung beschrieben mit einer Signalquelle, die einen Modulator und einen spannungsgesteuerten Oszillator umfaßt. Der Oszillator erzeugt ein frequenzmoduliertes Signal. Dabei ist die Modulation üblicherweise nicht ideal linear. Das Sendesignal s(t) wird von der Antenne abgestrahlt, an dem Meßobjekt reflektiert und empfangen. In einem ersten Mischer wird das nach der Zeit $\tau_{mess}$ empfangene Signal r(t) $\sim$ s(t-$\tau_{mess}$) mit dem aktuellen Sendesignal s(t) gemischt.

Diesem als Meßeinrichtung dienenden Zweig der Vorrichtung, im folgenden als MES bezeichnet, ist eine Bezugseinrichtung, im folgenden als REF bezeichnet, nebengeordnet. Dieser REF wird das von der Signalquelle erzeugte frequenzmodulierte Signal zugeführt. Die REF enthält ein Oberflächenwellenbauelement, das das frequenzmodulierte Signal um die Zeitdauer $\tau_{ref}$ verzögert an einen zweiten Mischer weiterleitet. Dieser Mischer erzeugt das Bezugssignal ref(t). Die tiefpaßgefilterten Signale mess(t) und ref(t) werden einer Auswerteeinheit zugeführt.

Wie bereits dargestellt, besteht das FMCW-Grundprinzip darin, daß ein linear frequenzmoduliertes Signal s(t) ausgesendet wird und die vom Meßobjekt reflektierten und empfangenen Echo-Signale r(t) mit dem Sendesignal s(t) zurückgemischt werden. T ist die Dauer eines Durchstimmvorgangs (Sweep), mit t∈[0, T]. Aufgrund der Zeitverzögerung $\tau_{mess}$, welche die Echosignale gegenüber dem Sendesignal aufweisen, entsteht bei einem linearen Sweep als Mischprodukt eine konstante, zur Entfernung proportionale Frequenz $f_i$ bzw. ein linear ansteigender Phasenhub. Bei einem nichtlinearen Sweep ergeben sich deutliche Abweichungen von diesen idealen Verhältnissen.

Bei der Betrachtung eines nichtlinearen Sweeps wird davon ausgegangen, daß der lineare Sweep mit der Basiskreisfrequenz $\omega_o$ und einer Sweep-Rate $\mu$ von

$$\mu = 2 \cdot \pi \frac{df}{dt}$$

mit einem Phasenfehler $\Delta\phi$ von einer idealen Phasenlinearität abweicht, also:

$$s(t) = \cos\left[\left(\omega_0 + \frac{\mu \cdot t}{2}\right) \cdot t + \Delta\phi(t)\right]$$

und

$$r(t) = \cos\left[\left(\omega_0 + \frac{\mu \cdot (t + \tau)}{2}\right) \cdot (t + \tau) + \Delta\phi(t + \tau)\right]$$

Das Mischprodukt von s(t) und r(t) ergibt somit unter Vernachlässigung höherer Mischprodukte und konstanter Phasenbeiträge:

$$mess(t) = \cos[\mu \cdot \tau \cdot t + \Delta\phi(t + \tau) - \Delta\phi(t)].$$

Bei der Fehlerbetrachtung wird davon ausgegangen, daß die Phasenfehler im Intervall $\tau$ als lineare Änderungen angenommen werden können. Unter der genannten Voraussetzung wird die ideale Signalfrequenz

$$f_i = \frac{\mu \cdot \tau}{2 \cdot \pi}$$

jeweils zum Zeitpunkt t durch den um t linearisierten Störterm

$$\Delta\Phi(t, \tau) = \tau \cdot \frac{d}{dt}[\Delta\phi(t)]$$

verzerrt. Die Signalfrequenz ist bei einem nichtlinearen Sweep also nicht mehr konstant, sondern über einen breiten Frequenzbereich verteilt. Die Störeffekte steigen proportional mit der Signallaufzeit und damit proportional mit der Meßdistanz an.

Ist der zeitabhängige Störterm $\Delta\Phi(t,\tau)_{ref}$ für eine beliebige Bezugsdistanz $s_{ref}$ (mit der zugehörigen Signallaufzeit $\tau_{ref}$), z.B. aus einer Bezugsmessung, bekannt, so sind daraus auch die Phasenfehler für beliebige Meßdistanzen $S_{mess}$ (mit der zugehörigen Signallaufzeit $\tau_{mess}$) gemäß:

$$\Delta\Phi(t, \tau)_{mess} = \Delta\Phi(t, \tau)_{ref} \cdot \frac{\tau_{mess}}{\tau_{ref}}$$

ableitbar. Aus der vorangegangenen Darstellung folgt, daß die Momentanphase $\varphi(t)$ des Signals proportional zur Meßdistanz bzw. zur Signallaufzeit ist. Also

$$\varphi_{mess}(t) = \varphi_{ref}(t) \cdot \frac{\tau_{mess}}{\tau_{ref}}.$$

In der DE 195 33 124 und in der Veröffentlichung von Vossiek et al., "Novel FMCW radar system concept with adaptive compensatiön of phase errors", 26th European Microwave Conference, Prague, Czech Republic, 9-12 Sept., 1996, S. 135-139, werden unterschiedliche Verfahren beschrieben, wie ein verzerrtes Signal bei bekanntem Phasenverlauf so entzerrt werden kann, daß die Phasenfehler korrigiert werden.

Eine Möglichkeit der Signalentzerrung besteht darin, das Meßsignal nicht wie üblich in konstanten Zeitintervallen, sondern in konstanten Phasenintervallen abzutasten (vorzugsweise Nulldurchgängen, d.h. Phasen im Abstand von 180° zueinander). Das Meßsignal wird hierbei zu den Zeitpunkten $t_n$ abgetastet, zu denen sich die Phase des Bezugssignals $\varphi_{ref}$ um ein Vielfaches einer vorgegebenen Phasenschrittweite $n \cdot d\varphi_{ref}$ geändert hat, also:

$$mess'(n \cdot dt') = mess\left(t_n = t\Big|_{\varphi_{ref}(t)=n \cdot d\varphi_{ref}}\right).$$

Um das neue korrigierte Meßsignal mess'(n·dt') zu bestimmen, werden die so gewonnenen Abtastpunkte sequentiell im zeitlichen Abtastintervall dt' angeordnet. Das neue Abtastintervall dt' berechnet sich aus $d\varphi_{ref}$, $s_{ref}$ und der Sweeprate μ. Diese Linearisierung bzw. Entzerrungsmethode wird im folgenden Nachentzerrung genannt.

Eine zweite Linearisierungsmöglichkeit besteht darin, anhand der in der Bezugseinheit gemessenen Phasenfehler ein korrigiertes Modulationssignal zu berechnen. Diese Linearisierung bzw. Entzerrungsmethode wird im folgenden Vorentzerrung genannt. Durch Ansteuerung des Oszillators mit dem modifizierten Steuersignal können Phasenfehler in den folgenden Sweeps, allerdings nur diejenigen Phasenfehler die systematisch, also zeitlich reproduzierbar auftreten, korrigiert werden. Stochastische Phasenfehler (maßgeblich das Phasenrauschen des Oszillators) werden durch diese Methodik nicht korrigiert. Insbesondere bei Signalen mit großer Laufzeit (also bei Distanzsensoren bei weit entfernten Zielen) stören die stochastischen Phasenfehler jedoch häufig stark.

Bewegen sich Meßobjekt und Sensor relativ zueinander, so wird der entfernungsabhängigen Frequenz $f_{dist}$ des Meßsignals eine zusätzliche Dopplerfrequenz $f_{dop}$ additiv überlagert. Das Signalspektrum von mess(t) verschiebt sich also in diesem Fall um die Dopplerfrequenz $f_{dop}$

Die Dopplerfrequenz berechnet sich gemäß:

$$f_{dop} = \frac{2 \cdot v}{\lambda},$$

wobei v die Objektgeschwindigkeit und λ die Wellenlänge des Meßsignals darstellen.

Da die Bezugsstrecke die reale Meßstrecke nun nicht mehr korrekt beschreibt, erfolgt die Signalnachentzerrung basierend auf den oben genannten Verfahren in diesem Fall nicht mehr ideal. Fehler treten dabei in erster Linie bei kurzen Signallaufzeiten auf, da hierbei die entfernungsabhängigen Frequenzen relativ klein gegenüber der Dopplerfrequenz sind. Ist die Dopplerfrequenz groß gegenüber entfernungsabhängigen Frequenzen, ist der durch die Dopplerverschiebung verursachte Fehler bei der Signalentzerrung vernachlässigbar, bzw. es ist sichergestellt, daß die vorgeschlagene Signalentzerrung zu einer Verbesserung des Meßergebnisses fuhrt.

Aufgabe der vorliegenden Erfindung ist es, zum Einsatz bei einem der eingangs beschriebenen Sensorsysteme ein Verfahren anzugeben, mit dem eine wirkungsvollere Kompensation von systematischen und stochastischen Phasenfehlern in allen Signallaufzeitbereichen bei vorhandenen Dopplerfrequenzverschiebungen erreicht wird. Außerdem soll eine dazu geeignet modifizierte Ausführungsform eines solchen Sensorsystems angegeben werden.

Diese Aufgabe wird mit dem Verfahren mit den Merkmalen des Anspruches 1 bzw. mit dem Sensorsystem mit den Merkmalen des Anspruches 7 gelöst. Weitere Ausgestaltungen ergeben sich aus den abhängigen Ansprüchen.

Bei dem erfindungsgemäßen Verfahren wird eine gesonderte Korrektur von Phasenfehlern bei den Meßsignalen mit hoher und niedriger Frequenz also den Signalkomponenten mit großer bzw. kleiner Signallaufzeit vorgenommen. Dazu wird zum einen das Bezugssignal verwendet, um eine Korrektur der Modulation des von der Signalquelle erzeugten Signals vorzunehmen, falls das erforderlich ist. Diese Korrektur erfolgt über ein von der Auswerteeinrichtung AE an die Signalquelle MO übermitteltes Steuersignal k(t). Dieses Steuersignal wird z. B. dadurch erzeugt, daß die Zeitpunkte, an denen das Bezugssignal eine definierte Phase aufweist, und die Abstände dieser Zeitpunkte voneinander bestimmt werden und daraus ein jeweiliger Korrekturwert rechnerisch ermittelt und anschließend zum Nachstimmen der Signalquelle verwendet wird. Falls keine störenden systematischen Phasenfehler in der Modulation des Sendesignals auftreten oder falls diese Phasenfehler mit der nachfolgend beschriebenen Nachentzerrung des Meßsignales in ausreichendem Umfang eliminiert werden können, kann diese systematische Korrektur (Vorentzerrung) der Modulation des Sendesignales entfallen.

Zum anderen wird eine Nachentzerrung der Meßsignalanteile, die zu Signalen mit großer Laufzeit gehören, vorgenommen. Das geschieht z. B. auf eine Weise, die in der DE 195 33 124 und in der Einleitung beschrieben ist. Vorzugsweise wird zunächst ein tieferfrequenter Anteil des Meßsignales in einem Hochpaßfilter eliminiert. Dann wird z. B. zu allen Zeitpunkten, an denen das Bezugssignal eine definierte Phase, z. B. einen Nulldurchgang, aufweist, das Meßsignal in digitalisierter Form abgespeichert. Diese Werte des Meßsignales werden dann ausgewertet unabhängig von den fehlerhaften Schwankungen der Phase, die von der Signalquelle oder anderen Komponenten der Vorrichtung hervorgerufen werden. Das ausgewertete Meßergebnis entspricht daher einer Messung mit z. B. ideal linear frequenzmoduliertem Signal.

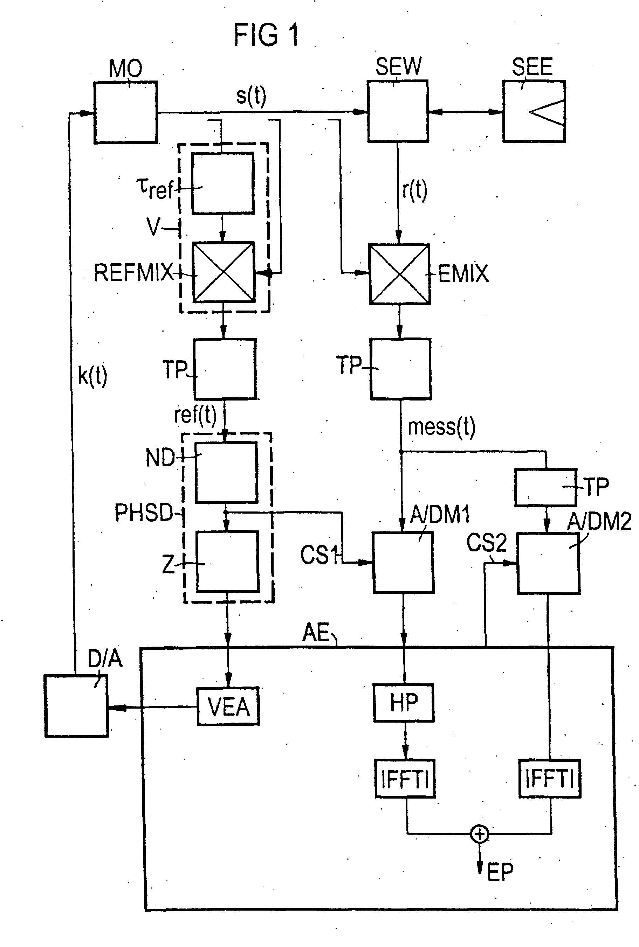

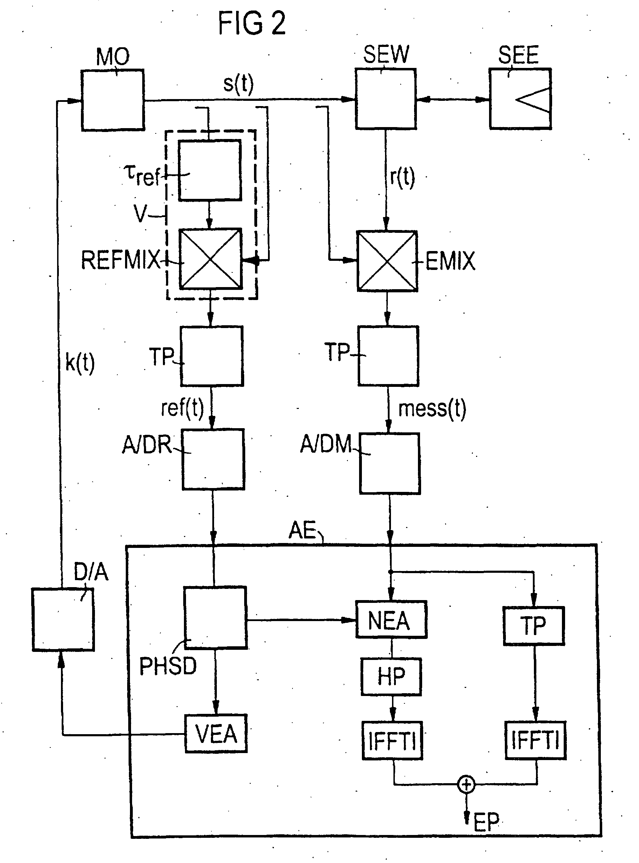

Es folgt eine Beschreibung des Verfahrens und des dazu geeignet modifizierten Sensorsystems anhand der Figuren 1 und 2. Figuren 1 und 2 zeigen je ein Blockschaltbild eines Sensorsystems, das für den Einsatz des erfindungsgemäßen Verfahrens geeignet ist.

Figuren 3 und 4 zeigen Sensorsysteme entsprechend dem Stand der Technik.

In der in Figur 1 als Beispiel dargestellten Anordnung dient der Phasenschritt-Diskriminator PHSD dazu, die Zeitpunkte des Verstreichens konstanter Phasenintervalle im Bezugssignal zu detektieren. Vorzugsweise werden als konstante Phasenintervalle die Nullstellen des Bezugssignals mit einem Nullstellendetektor ND bestimmt. Der Phasenschritt-Diskriminator PHSD erzeugt ein Triggersignal CS1 welches einen Zählerbaustein Z steuert, so daß die Zeitintervalle, die jeweils zwischen zwei Phasenschritten (vorzugsweise zwei Nullstellen) liegen; gemessen werden können. Die so gewonnenen Zählerstände werden von der Auswerteeinheit AE, die vorzugsweise einen Mikroprozessor oder Signalprozessor beinhaltet, eingelesen. Basierend auf diesen Meßwerten wird im Vorentzerrungs-Algorithmus VEA ein neues Steuersignal k(t) berechnet und über einen Digital-Analog-Wandler D/A ausgegeben, so daß die systematischen Phasenfehler des frequenzmodulierten Signals s(t) kompensiert werden und sich eine bis auf stochastische Phasenfehler lineare Frequenzmodulation von s(t) ergibt.

Falls die gemessene Zeit zwischen zwei Auslöseimpulsen von CS1 größer ist als die erwartete (die durch die Sweep-Rate und die Dimensionierung der Verzögerungsleitung festgelegt wird), muß die Steigung der Zeit-Frequenz-Geraden im Sweep (Durchgang der Modulation von der niedrigsten zur höchsten Frequenz oder umgekehrt) vergrößert werden. Falls der Abstand der Nulldurchgänge des Bezugssignales zu klein ist, wird der Anstieg der Zeit-Frequenz-Geraden der Modulation erniedrigt. Im Ergebnis erhöht bzw. erniedrigt sich die Frequenz des Bezugsignales.

Vorzugsweise kann ein Steuersignal zur Korrektur der Modulation für die n-te Messung aus den Bezugssignalen ref(t) mehrerer vorangegangener Messungen (z. B. die unmittelbar vorangegangenen L Messungen n-L bis n-1) abgeleitet werden. Dieses Steuersignal kann insbesondere gleitend immer aus der gleichen Anzahl (L) von unmittelbar vorausgegangenen Messungen abgeleitet werden. Durch eine Mittelung der. gemessenen Phasenfehler kann bewirkt werden, daß maßgeblich systematische Phasenfehler bei der Korrektur berücksichtigt werden und sich störende stochastisch verteilte Phasenfehler ausmitteln. Durch Umwandein der erfaßten Werte der Phasenfehler in geeignete Werte einer Ansteuerspannung für die Signalqueile kann die Frequenzmodulation wie vorgesehen korrigiert werden.

Vorteilhaft läßt sich das vorentzerrte Modulationssignal auch adaptiv über eine Iterationsprozedur bestimmen. Hierbei ergibt sich die Modulation des Sendesignals einer jeweiligen neuen Messung aus der Modulation des Sendesignals bei der vorhergehenden Messung unter Berücksichtigung einer Korrektur, die basierend auf den gemessenen Phasenfehlern berechnet wurde. Die Iteration vermindert sukzessiv die Abweichung der zeitlichen Abstände zweier Phasenschritte, z.B. Nulldurchgänge, von den Sollwerten. Die Iterationsprozedur wird so oft wiederholt, bis alle Abweichungen der Zeitabstände von den geforderten Werten dem Betrag nach unterhalb einer vorgegebenen Grenze liegen. Diese Grenze hängt von der Wahl der Bearbeitungszeit und der Meßgenauigkeit ab.

Das Triggersignal CS1 dient des weiteren dazu, die Analog-Digital-Wandlung mittels des Wandlers A/DM1 zu starten. Durch diese Art der Triggerung wird das Meßsignal mess(t) wie in DE 195 33 124 beschrieben nachentzerrt also die stochastischen Phasenfehler minimiert. Um die Signalanteile des Nahbereiches, die durch diese Art der Nachentzerrung bei vorhandenen größeren Dopplerverschiebungen nicht korrekt entzerrt werden, zu unterdrücken, wird das digitalisierte Signal anschließend hochpaß-gefiltert.

Parallel zu dem beschriebenen Signalzweig wird das Meßsignal mess(t) durch einen zweiten A/D-Wandler A/DM2, mit einer konstanten Abtastrate digitalisiert. Um die Signalanteile des Fernbereiches zu unterdrücken und die Einhaltung des Abtasttheorems zu gewährleisten, wird das Signal vor der Digitalisierung tiefpaßgefiltert. Die Abtasttriggerung CS2 wird vorzugsweise so gewählt, daß sich über einen gesamten Sweep in etwa genauso viele Trigger-Ereignisse ergeben wie bei CS1. Hierdurch wird sichergestellt, daß die effektive Abtastrate bei hochpaß- und tiefpaßgefiltertem Signalzweig gleich sind und sich so bei der FFT-Auswertung (Fast Fourier Transformation) gleiche Frequenzintervalle ergeben. So können die gewonnenen Spektren für die kleinen und großen Signallaufzeiten leicht zu einem einheitlichen Echoprofil EP für den gesamten Auswertungsbereich kombiniert werden. Die Grenzfrequenzen von Hoch- und Tiefpaß werden vorzugsweise gleich der höchsten im Meßsignal zu erwartenden Dopplerfrequenz gewählt.

Zur optimalen Funktionsweise des Verfahrens sind die Frequenz des Sendesignals, die Sweepdauer T und die Sweeprate $\mu$ derart zu wählen, daß die stochastischen Phasenfehler des Oszillators erst bei Messung einer so großen Entfernung störend in Erscheinung treten, beider sichergestellt ist, daß die entfernungsabhängigen Frequenzen des Meßsignales größer sind als die höchsten zu erwartenden Dopplerfrequenzen.

Fig. 2 zeigt eine weitere mögliche Ausführung des erfindungsgemäßen Sensorkonzeptes. Hierbei werden das Meßsignal mess(t) und das Bezugssignal ref(t) mit einer konstanten Abtastrate durch die Wandler A/DM bzw. A/DR digitalisiert und in die Auswerteeinheit eingelesen. Die Phasenschrittdetektion PHSD erfolgt hier algorithmisch, was insbesondere dann günstig ist, wenn kleine Phasenschritte (kleiner als $\pi$) detektiert werden sollen. Aus den Zeitintervallen der Phasenschritte wird wie schon beschrieben ein neues Modulationssignal berechnet. Der Nachentzerrungs-Algorithmus NEA wird vorzugsweise wie in [Vossiek, et al., "Novel FMCW radar system concept with adaptive compensation of phase errors," 26th European Microwave Conference, Prague, Czech Republic, 9-12 Sept., 1996, S. 135-139] beschrieben ausgeführt. Die Aufteilung in Nah- und Fernbereich erfolgt wie schon für Fig. 1 ausgeführt, nur daß hier sämtliche Signalverarbeitungsschritte per Software durchgeführt werden.

Alternativ zur schnellen Fouriertransformation können auch andere bekannte Frequenzanalysemethoden wie Bandpaßfilterbänke oder statistische Frequenzanalysemethoden implementiert werden. Insbesondere günstig sind Verfahren, bei denen die a priori bekannte Aufteilung der interessierenden Frequenzbänder für Fern- und Nahbereich ausgenutzt wird. Hierdurch kann der Rechenaufwand bei der Spektralanalyse minimiert werden.

Das beschriebene Verfahren kann auch vorteilhaft für solche frequenzmodulierten Systeme verwendet werden, die prinzipiell oder aufgrund von geeigneten Vorrichtungen keine systematischen Phasenfehler mehr enthalten. Dies ist beispielsweise bei Systemen mit direkter digitaler Synthese des Sendesignals der Fall. Die Vorrichtung zur Vorentzerrung, also zur Kompensation der systematischen Phasenfehler, kann hier entfallen. Die getrennte Nachentzerrung für die Signalanteile mit größer Laufzeit erfolgt wie schon oben beschrieben.

Das erfindungsgemäße Verfahren wendet ein signallaufzeitangepaßtes Korrekturverfahren für Phasenfehler an, das auch zur Messung schnell bewegter Objekte in allen Entfernungsbereichen und bei Verwendung von Signalquellen mit starkem Phasenrauschen eingesetzt werden kann. Die Signalquelle ist z. B. ein modulierbarer Mikrowellenoszillator, eine Lichtquelle oder ein Ultraschallgenerator. Nach der oben beschriebenen Korrektur der Modulation der Signalquelle, womit systematische Phasenfehler beseitigt werden, oder bei einer von vornherein von systematischen Phasenfehlern freien Modulation enthält das Empfangssignal in erster Linie nur noch stochastische Phasenfehler. Da Phasenfehler des Sendesignales auch nachträglich kompensiert werden können (Nachentzerrung), wird eine solche nachträgliche Korrektur des Meßsignals bei dem erfindungsgemäßen Verfahren für den Anteil eines Meßsignales angewendet, der zu Signalkomponenten mit großer Laufzeit gehört. Die Trennung des Meßsignales in Signalanteile mit kurzer und langer Laufzeit erfolgt durch Tiefpaßfilterung für die kurzen Signallaufzeiten, zur Eliminierung der Signalanteile mit großer Laufzeit, und durch Hochpaßfilterung für die großen Laufzeiten, zur Eliminierung der Signalanteile mit kleiner Laufzeit. Die Grenze der Aufteilung wird vorzugsweise bei dem Wert der höchsten üblicherweise bei der vorgesehenen Anwendung zu erwartenden Dopplerfrequenz gewählt.

Der besondere Vorteil des erfindungsgemäßen Verfahrens liegt darin, daß eine getrennte Eliminierung von Phasenfehlern für Messungen mit kurzen Signallaufzeiten und Messungen mit großen Signallaufzeiten erfolgt. Bei Sensoren zur Distanzmessung erfolgt also eine Unterteilung von Messungen für den Nahbereich und Messungen für den Fernbereich. Dadurch erhält man bei einer Auswertung der diesen Bereichen zugehörigen Teil-Meßsignale genauere Ergebnisse für Meßobjekte unterschiedlicher Entfernungen und Geschwindigkeiten als bei herkömmlichen Meßverfahren. Das erfindungsgemäße Verfahren kann bei Radar-, Lidar- (light detection ahd ranging) und Sonarsystemen (unter Verwendung von [Ultra-] Schall) eingesetzt werden. Zusätzlich zu einer geeigneten Auswerteeinrichtung ist ein herkömmliches Sensorsystem mit einer Vorrichtung zur Aufteilung des Meßsignales in Nah- und Fernbereich zu versehen, z. B. mit dem in Figur 1 dargestellten Hochpaßfilter HP. Das Verfahren kann auch unter Verwendung eines ebenso modifizierten bistatischen Sensorsystems vergleichbar Figur 4 eingesetzt werden. Die übrige Ausgestaltung der Sensorsysteme ist weitgehend freigestellt. Insbesondere können weitere Mischstufen, Frequenzteiler oder Frequenzvervielfacher zur Erzeugung von besser zu verarbeitenden Zwischenfrequenzen o. dgl. wie üblich vorgesehen werden.

**Patentansprüche**

1. Verfahren zum Betrieb eines Sensorsystems,

   - bei dem ein sich wellenförmig ausbreitendes frequenzmoduliertes Signal erzeugt wird,
   - bei dem das erzeugte Signal abgestrahlt und ein von einem Meßobjekt reflektierter Anteil des Signals empfangen wird,
   - bei dem das empfangene Signal mit dem erzeugten Signal zu einem Meßsignal gemischt wird,
   - bei dem das erzeugte Signal mit einem dazu zeitlich verzögerten Signal zu einem Bezugssignal gemischt wird,
   - bei dem unter Verwendung des Bezugssignals Phasenfehler ermittelt werden, die in dem erzeugten Signal oder in dem empfangenen Signal auftreten,
   - bei dem das Meßsignal in einen niederfrequenten Anteil und einen höherfrequenten Anteil aufgeteilt wird,
   - bei dem aus dem höherfrequenten Anteil des Meßsignals und aus dem Bezugssignal eine Korrektur vorhandener Phasenfehler ermittelt wird und
   - bei dem der niederfrequente Anteil des Meßsignales und der korrigierte höherfrequente Anteil des Meßsignales einer Auswertung zugeführt werden.

2. Verfahren nach Anspruch 1,
   bei dem systematische Phasenfehler, die im erzeugten Signal vorhanden sind, durch eine Korrektur der Modulation des Signals verringert werden.

3. Verfahren nach Anspruch 2,
bei dem die Korrektur der Modulation des Signals in mehreren Schritten, die jeweils eine Messung umfassen, vorgenommen wird und dabei in jedem Schritt die in vorhergehenden Schritten vorgenommenen Korrekturen zu einer weiteren Verbesserung der Korrektur berücksichtigt werden.

4. Verfahren nach Anspruch 2 oder 3,
bei dem die Korrektur der Modulation des Signals durch eine Mittelung aus mehreren Messungen des Bezugssignals abgeleitet wird.

5. Verfahren nach einem der Ansprüche 1 bis 4,
bei dem die Aufteilung des Meßsignals bei einer Grenzfrequenz erfolgt, die einer höchsten für eine Messung vorgegebenen Dopplerfrequenz entspricht.

6. Verfahren nach einem der Ansprüche 1 bis 5,
bei dem die Frequenz des erzeugten Signals, die Dauer und die Rate des Durchstimmens der Frequenz (sweep) derart gewählt werden, daß stochastische Phasenfehler für Laufzeiten des Meßsignales, bei denen die entfernungsabhängigen Frequenzen des Meßsignals kleiner sind als ein vorgegebener Wert einer Dopplerfrequenz, einen höchstens vernachlässigbar geringen Einfluß auf ein Meßergebnis haben.

7. Sensorsystem,

- bei dem eine Signalquelle (MO) zur Erzeugung eines sich wellenförmig ausbreitenden frequenzmodulierten Signals vorhanden ist,
- bei dem eine Sende- und Empfangseinrichtung (SEW; SEE) und eine Mischeinrichtung (EMIX) vorhanden sind,
- bei dem diese Mischeinrichtung so angeordnet ist, daß sie ein von der Sende- und Empfangseinrichtung kommendes Signal mit dem von der Signalquelle erzeugten Signal zu einem Meßsignal (mess(t)) mischen kann,
- bei dem eine Verzögerungseinrichtung (V) vorhanden ist, die so angeordnet und beschaffen ist, daß sie aus dem von der Signalquelle kommenden Signal ein dazu zeitlich verzögertes Bezugssignal (ref(t)) erzeugt,
- bei dem eine Auswerteeinrichtung (AE) vorhanden ist, der das Meßsignal und das Bezugssignal zugeführt werden und
- bei der ein Hochpaßfilter (HP) vorhanden ist, das diejenigen niederfrequenten Anteile des Meßsignales eliminiert, die aus Messungen in einem vorgegebenen Laufzeitbereich resultieren, und diejenigen höherfrequenten Anteile des Meßsignales passieren läßt, die aus Messungen in einem Bereich größerer Signallaufzeiten resultieren.

8. Sensorsystem nach Anspruch 7,
bei dem die Auswerteeinrichtung (AE) dazu eingerichtet ist, aus dem Bezugssignal oder aus dem Bezugssignal und dem Meßsignal ein Korrektursignal für eine Korrektur der Modulation der Signalquelle zu erzeugen, und bei dem die Auswerteeinrichtung dazu eingerichtet ist, aus dem Bezugssignal und aus einem Anteil des Meßsignals, der in dem Meßsignal vorhandene höhere Frequenzen umfaßt, wegen auftretender Phasenfehler erforderliche Korrekturen eines Meßwertes zu ermitteln.

9. Sensorsystem nach Anspruch 7 oder 8,
bei dem zwischen der Verzögerungseinrichtung (V) und der Auswerteeinrichtung (AE) ein Phasenschritt-Diskriminator (PHSD) und ein Zähler (Z) angeordnet sind und
bei dem zwischen der Mischeinrichtung (EMIX) zur Erzeugung des Meßsignals und der Auswerteeinrichtung (AE) ein erster Analog-Digital-Wandler (A/DM1), der von dem Phasenschritt-Diskriminator (PHSD) impulsgesteuert (trigger) wird, und parallel dazu angeordnet ein mit einem Tiefpaßfilter (TP) versehener zweiter Analog-Digital-Wandler (A/DM2) vorhanden sind.

**Claims**

1. Method for operating a sensor system

- in which a frequency-modulated signal propagating in the form of a wave is generated,

- in which the generated signal is emitted and a component of the signal reflected by a device under test is received,
- in which the received signal is mixed with the generated signal to form a measuring signal,
- in which the generated signal is mixed with a signal delayed in time relative thereto to form a reference signal,
- in which the reference signal is used to determine phase errors which occur in the generated signal or in the received signal,
- in which the measuring signal is subdivided into a low-frequency component and an higher-frequency component,
- in which a correction of existing phase errors is determined from the higher-frequency component of the measuring signal and from the reference signal, and
- in which the low-frequency component of the measuring signal and the corrected higher-frequency component of the measuring signal are fed to an evaluation unit.

2. Method according to Claim 1, in which systematic phase errors which are present in the generated signal are reduced by a correction of the modulation of the signal.

3. Method according to Claim 2, in which the correction of the modulation of the signal is undertaken in a plurality of steps which respectively comprise a measurement, and in the process account is taken in each step of the corrections, undertaken in the preceding steps, for the purpose of a further improvement of the correction.

4. Method according to Claim 2 or 3, in which the correction of the modulation of the signal is derived by averaging from a plurality of measurements of the reference signal.

5. Method according to one of Claims 1 to 4, in which the subdivision of the measuring signal is performed at a cut-off frequency which corresponds to a highest Doppler frequency prescribed for a measurement.

6. Method according to one of Claims 1 to 5, in which the frequency of the generated signal, and the duration and the rate of the tuning of the frequency sweep are selected in such a way that stochastic phase errors in the transit times of the measuring signal for which the distance-dependent frequencies of the measuring signal are lower than a prescribed value of a Doppler frequency have at most a negligibly slight influence on a measurement result.

7. Sensor system

- in which a signal source (MO) is present for generating a frequency-modulated signal propagating in the form of a wave,
- in which a transmitting and receiving device (SEW; SEE) and a mixing device (EMIX) are present,
- in which this mixing device is arranged such that it can mix a signal coming from the transmitting and receiving device with the signal generated by signal source to form a measuring signal (mess(t)),
- in which a time-delay device (V) is present which is arranged and designed such that it generates from the signal coming from the signal source a reference signal (ref(t)) delayed in time relative thereto,
- in which an evaluation device (AE) is present which is fed the measuring signal and the reference signal, and
- in which a high-pass filter (HP) is present which eliminates those low-frequency components of the measuring signal which result from measurements in a prescribed transit time range, and passes those higher-frequency components of the measuring signal which result from measurements in a range of larger signal transit times.

8. Sensor signal according to Claim 7, in which the evaluation device (AE) is set up to generate from the reference signal or from the reference signal and the measuring signal a correction signal for correcting the modulation of the signal source, and in which the evaluation device is set up to determine from the reference signal and from a component of the measuring signal which comprises higher frequencies present in the measuring signal corrections of a measured value which are necessary because of occurring phase errors.

9. Sensor system according to Claim 7 or 8, in which a phase step discriminator (PHSD) and a counter (Z) are arranged between the time-delay device (V) and the evaluation device (AE), and in which there are present between the mixing device (EMIX) for generating the measuring signal and the evaluation device (AE) a first analogue-to-digital converter (A/DM1), which is pulse-controlled (triggered) by the phase step discriminator (PHSD), and, arranged in parallel therewith, a second analogue-to-digital converter (A/DM2) provided with a lowpass filter (TP).

## EP 0 965 052 B1

**Revendications**

1. Procédé pour le fonctionnement d'un système détecteur,

   - dans lequel un signal modulé en fréquence se propageant de manière ondulatoire est généré,
   - dans lequel le signal généré est émis et une partie du signal réfléchie par un objet de mesure est reçue,
   - dans lequel le signal reçu est mélangé avec le signal généré pour former un signal de mesure,
   - dans lequel le signal généré est mélangé avec un signal retardé par rapport à celui-ci pour former un signal de référence,
   - dans lequel, à l'aide du signal de référence, des erreurs de phase sont détectées, qui apparaissent dans le signal généré ou dans le signal reçu,
   - dans lequel le signal de mesure est partagé en une partie de basse fréquence et une partie de plus haute fréquence,
   - dans lequel, à partir de la partie de plus haute fréquence du signal de mesure et à partir du signal de référence, une correction d'erreurs de phase existantes est déterminée, et
   - dans lequel la partie de basse fréquence du signal de mesure et la partie corrigée de plus haute fréquence du signal de mesure sont amenées à une évaluation.

2. Procédé selon la revendication 1,
   dans lequel des erreurs de phase systématiques, qui existent dans le signal généré, sont amoindries par une correction de la modulation du signal.

3. Procédé selon la revendication 2,
   dans lequel la correction de la modulation du signal est effectuée en plusieurs étapes comprenant chacune une mesure, en tenant compte, dans chaque étape, des corrections effectuées dans des étapes précédentes pour améliorer davantage la correction.

4. Procédé selon la revendication 2 ou 3,
   dans lequel la correction de la modulation du signal est obtenue par un calcul de la moyenne de plusieurs mesures du signal de référence.

5. Procédé selon l'une des revendications 1 à 4,
   dans lequel le partage du signal de mesure s'effectue à une fréquence limite qui correspond à une fréquence Doppler la plus élevée définie à l'avance pour une mesure.

6. Procédé selon l'une des revendications 1 à 5,
   dans lequel la fréquence du signal généré, la durée et le taux de balayage de la fréquence (sweep) sont choisis de telle façon que des erreurs de phase stochastiques de temps de parcours du signal de mesure, dans lesquelles les fréquences variables avec la distance du signal de mesure sont inférieures à une valeur définissable à l'avance d'une fréquence Doppler, ont une influence tout au plus négligemment faible sur un résultat de mesure.

7. Système détecteur,

   - dans lequel il existe une source de signal (MO) destinée à générer un signal modulé en fréquence se propageant de manière ondulatoire,
   - dans lequel il existe un dispositif d'émission et de réception (SEW ; SEE) et un dispositif mélangeur (EMIX),
   - dans lequel ce dispositif mélangeur est agencé de façon à ce qu'il puisse mélanger un signal provenant du dispositif d'émission et de réception avec le signal généré par la source de signal pour former un signal de mesure (mess(t)),
   - dans lequel il existe un dispositif de retard (V) qui est agencé et constitué de façon à ce qu'il génère à partir du signal provenant de la source de signal un signal de référence (ref(t)) retardé par rapport à celui-ci,
   - dans lequel il existe un dispositif d'évaluation (AE) auquel sont amenés le signal de mesure et le signal de référence, et
   - dans lequel il existe un filtre passe-haut (HP) qui élimine les parties de basse fréquence du signal de mesure, qui résultent de mesures effectuées dans une gamme de temps de parcours, et qui laisse passer les parties de plus haute fréquence du signal de mesure, qui résultent de mesures effectuées dans une gamme de temps plus importants de parcours.

8. Système détecteur selon la revendication 7,

dans lequel le dispositif d'évaluation (AE) est configuré pour générer à partir du signal de référence ou à partir du signal de référence et du signal de mesure un signal de correction pour une correction de la modulation de la source de signal, et

dans lequel le dispositif d'évaluation est configuré pour calculer à partir du signal de référence et à partir d'une partie du signal de mesure, laquelle comprend des fréquences plus élevées existant dans le signal de mesure, des corrections d'une valeur mesurée, qui sont nécessaires à cause de l'apparition d'erreurs de phase.

9. Système détecteur selon la revendication 7 ou 8,

dans lequel, entre le dispositif de retard (V) et le dispositif d'évaluation (AE), un discriminateur de pas de phase (PHSD) et un compteur (Z) sont agencés, et

dans lequel il existe entre le dispositif mélangeur (EMIX) destiné à générer le signal de mesure, et le dispositif d'évaluation (AE) un premier convertisseur analogique-numérique (A/DM1) commandé par impulsions par le discriminateur de pas de phase (PHSD), et parallèlement à celui-ci un second convertisseur analogique-numérique (A/DM2) doté d'un filtre passe-bas (TP).

FIG 1

FIG 2

## FIG 3

MO

SEW

SEE

s(t)

$\tau_{ref}$

V

REFMIX

r(t)

EMIX

TP

TP

ref(t)

AE

mess(t)

k(t)

D/A

A/D

A/D

## FIG 4

MO

SEE

s(t)

$\tau_{ref}$

V

REFMIX

EMIX

SEE

r(t)

TP

TP

ref(t)

AE

mess(t)

k(t)

D/A

A/D

A/D